# EUROPEAN PATENT APPLICATION

(11) **EP 4 790 583 A1**
(43) Date of publication of application: **12.08.2026**
(21) Application number: 25156754.1
(22) Date of filing: 10.02.2025
(51) Int. Cl.: G06F 30/17, G06F 16/583, G06F 30/27, G06N 3/08, G06T 19/20, G06T 17/00

(54) **GENERATIVE DESIGN AND OPTIMIZATION BASED ON USER-SPECIFIC TERMINOLOGY FOR DESIGN DESCRIPTORS**

(71) Applicant: HONDA MOTOR CO., LTD., Tokyo 105-8404 (JP)
(72) Inventor: Rios, Thiago, 63073 Offenbach/Main (DE); Menzel, Stefan, 63073 Offenbach/Main (DE)
(74) Representative: Roth, Sebastian

(57) **Abstract**

A computer-implemented method that trains a generative model for supporting a user in generating or modifying a design of an object comprises a step of acquiring, from a database, a plurality of data sets of geometric bodies of objects, for each set at least one image associated with the set, wherein each data set is associated with a class of the object. The method further acquires textual parameters related to the objects, and encodes the acquired images by applying a vision-language model based on the textual parameters into vectors including numerical values for the acquired textual parameters. Then, the method generates a parametric representation of each object, and generates training data based on the parametric representations and the associated data sets and/or the images. Using the generated training data, the method then trains a generative model using the generated training data, and outputs the trained generative model.

## Description

The invention concerns the field of methods for computer-based design of objects. In particular, a computer-implemented method and a system for generating and modifying 2D representations or 3D representations of designs of physical objects are proposed.

The 2D representations may include images, e.g. images that depict at least one object. The image may also depict a plurality of objects, e, g, a scene with plural objects. The objects are physical objects, for example 3D objects. A physical object may be a mechanical component of a product, e.g. a body of a vehicle. The vehicle may be a maritime vehicle, an aerospace vehicle, or an automotive vehicle. In the automotive industry, technical aspects, functional aspects, and aesthetic aspects are relevant for customers. The design of the body of a car determines technical characteristics, e.g. aerodynamic drag, and the visual outward appearance of the car.

The development of new products including physical objects involves participants from plural technical and creative disciplines, including engineers of different technical skills, and designers. The engineers and designers involved in the product development team may have different expertise and a varying degree of experience in their professional life.

Currently available computer-aided design (CAD) and engineering (CAE) tools allow the users to analyze the performance of the products in multiple domains. The available tools are generally limited to simulating physical characteristics of the products in a specific domain, e.g., performing aerodynamic, fluid-dynamic or structural simulation of the objects. There often arise problems concerning the compatibility between different design tools and engineering tools. In a multidisciplinary product development team, the complexity of computer simulation models often adversely affects the communication of the utilized design parameters and obtained results between different stakeholders of the product development team.

For optimizing the performance of objects with respect to objectives in the domain of physics and mechanics, engineers utilize a constrained set of numerical parameters. However, most of the aesthetic characteristics of objects lack a canonical geometric representation. During the product design phase of the object, the design engineers adjust the aesthetic characteristics of the object based on the feedback of a design team. Furthermore, as different design engineers tend to communicate their vision for the object using different expressions, modifying the design is intuitive to a significant extent, which often delays the product development process and thereby increases cost in the product development phase.

It is an object of the invention to provide support solutions for computer-based product development processes that improve the design and development of objects with regard to efficiency and time of processes, and quality of the design object.

The computer-implemented method that trains a generative model for supporting a user in generating or modifying a design of an object according to claim 1, and the computer-implemented method for supporting a user in generating or modifying a design of an object according to the corresponding independent claim provide advantageous solutions to address the afore-mentioned issues.

The dependent claims define further advantageous embodiments.

The computer-implemented method for generating a generative model for supporting a user in generating or modifying a design of an object comprises a step of acquiring, from a database, a plurality of data sets of geometric bodies of objects, for each data set at least one image associated with each object, wherein each data set is associated with a class of objects. The method further acquires textual parameters related to the objects, and encodes the acquired images into vectors including numerical values for the acquired textual parameters by applying a vision-language model, in particular by applying the vision-language model on the images available in the data set. Then, the method generates a parametric representation of each object, and generates training data based on the parametric representations and the associated data sets and/or the images. Using the generated training data, the method then trains a generative model using the generated training data, and outputs the trained generative model.

The method provides a trained generative model using an available data set. Applying the trained generative model enables a user to achieve the objective of generating images or 3D object representations from textual descriptors provided by the user of a system implementing the method.

For supporting a user in generating or modifying a design of an object, a computer-implemented method comprises acquiring, by an input interface, at least one image and textual parameters associated with the image. The method then encodes the acquired at least one image by applying a vision-language model based on the textual parameters into vectors including numerical values for the acquired textual parameters, and generates a parametric representation based on the vectors including the numerical values. Then, the method computes, by applying a trained generative model, the corresponding 2D or 3D representation of an object based on the parametric representation.

The computer-implemented method provides a framework for the design engineer as the user to generate 2D and 3D representations of objects based on a set of images and a set of textual descriptions of the parameters that the design engineer intends to manipulate. By the pre-training of the system on a set of existing representations of objects and the corresponding set of textual parameters, the system learns to generate the 2D and 3D representations of objects.

The user may modify the generated 2D and 3D representations of the objects in a subsequent process via a graphical user interface (GUI). Instead of relying exclusively on geometry-based descriptors, the proposed method enables the design engineer to input a preference for certain aesthetic features, a reference to biological structures or to an artistic style, among other characteristics in order to utilize the input in textual parameters intuitively for modifying 2D and 3D designs of the objects.

The computer-implemented method generates designs of objects based on a set of initial sketches, a set of descriptive features expressed in the user's jargon in natural language and, optionally, on an additional set of numerical parameters, all provided as input by the user. In the training phase, the method learns to assign numerical values to the textual features. If the additional set of numerical parameters is provided, the method concatenates the numerical values assigned to the textual features to the additional numerical parameters and thereby obtains a single compact representation for the design of the object. The user is able to modify both geometry-specific parameters, e.g., main dimensions of the object or a component thereof, as well as aesthetic features, e.g., a "sportiveness" of an object design, which currently are more challenging to quantify and to integrate into the product development process.

The computer-implemented method assigns values to the textual parameters by evaluating the input set of images, sketches or drawings, using a vision-language model (VLM). The vision-language model outputs a probability of the input images to fit a parameter when compared with the other provided textual parameters. Hence, if the user provides an image of a cube and the textual parameters (text-based parameters, text-based descriptors, textual descriptors) include the word "square", the vision-language model outputs a higher value to "square" than to the other words of the textual parameters. The user defines the selected textual parameters based on his or her preferences, using his or her jargon, without using words from any predefined range of words. By performing the same task on a database including images and 2D or 3D shapes, a generative model learns to map the computed probabilities to 3D designs or corresponding images. Using the trained generative model in the application phase enables the user to convert an initial set of sketches depicting the object into a final draft design of the object. The final draft design of the object may then be subject to further modification by manipulating the computed probabilities on the original set of sketches. The computer-implemented method first generates an interpretable representation from textual descriptors, which the method then uses to train the generative model.

The invention is advantageous for designers and engineers in widely different branches of industry, which include automotive, aerospace, maritime, heavy machinery, power products, gaming, and computer graphics industry. The designer and engineers may utilize their own specific language (jargon) to represent geometric features of products, and therefore the communication and, thus, the collaborative development of products in multidisciplinary teams is improved. This has the effect of improving the product development process with regard to time, cost, and the quality of the product.

Other than the computer-implemented method, known approaches utilize textual features to generate either images or 3D designs. The known approaches emphasize processes that generate 2D/3D designs directly from text prompts input by the designer. Contrary thereto, the computer-implemented method generates an intermediate representation based on textual design descriptors that the user provides as input.

The computer-implemented method may generate 2D representations of obj ects, e.g. an image or a set of images, which are not necessarily restricted to representing a singular specific object, but represent, e.g., a scene that includes a plurality of objects.

According to an embodiment, the computer-implemented method comprises acquiring, from the database, metadata including numerical parameters associated with the plurality of data sets of geometric bodies of objects and the at least one image associated with each object. The method then proceeds with generating a parametric representation of each object, which includes concatenating the vectors including numerical parameters with the numerical values of the corresponding metadata acquired from the database.

Hence, the computer-implemented method provides a framework for integrating features provided by the user in his own language with numerical parameters stored in association with the data sets of the objects in the database.

In an embodiment, the computer-implemented method comprises storing the parametric representation of each object in the database.

Hence, the computer-implemented method provides a framework for expanding the database storing data sets of objects in the database in an application phase.

In an embodiment, the computer-implemented method comprises acquiring, via the input interface, numerical parameters associated with the at least one image and textual parameters, and generating the parametric representation of each object includes concatenating the vectors including numerical parameters with the numerical values of the corresponding numerical parameters.

According to an embodiment, the computer-implemented method further comprises outputting, via an output interface, the numerical values for the acquired textual parameters converted into a text format, and outputting, via the output interface the at least one of at least one image and the data set of a geometric body of the object. The method then proceeds with acquiring, via the input interface, a user input that modifies the output numerical values for the acquired textual parameters converted into a text format, and subsequently generates a modified geometric representation based on the modified numerical values. The method computes by applying the trained generative model, at least one of at least one modified image and a modified data set of a geometric body of the object based on the modified generated parametric representation.

The method may update the images in the graphical user interface based on the newly generated asset that includes least one modified image and a modified data set of a geometric body of the object.

Alternatively or additionally, the method subsequently stores the generated asset in the database.

This offers the advantage that the designer may intuitively modify the parametric representation, and immediately obtain a feedback on the modifications by respectively output at least one modified image and modified data set of a geometric body of the object based on the modified generated parametric representation. This enables a productive dialogue between the design engineer and the system implementing the method based on the parametric representation and the textual parameters, for both the system and the engineer. Thus, the product development phase for a target object is improved, resulting in high quality object designs, decrease in development time, and ultimately in reduced cost.

The computer-implemented method comprises acquiring, via the input interface a target performance metric for the object and a target performance range for target performance metric. The method further performs repeatedly steps of: simulating a performance of the at least one of at least one image and a data set of a geometric body of the object and computing the target performance metric; and in case the computed target performance metric does not meet the target performance range, updating the parametric representation; computing, by applying the trained generative model, the at least one of at least one image and the modified data set of a geometric body of the object based on the updated generated parametric representation until the computed target performance metric meets the target performance range. In case the computed target performance metric does meet the target performance range, the method outputs the at least one of at least one image and the modified data set of a geometric body of the object.

The embodiment provides the advantage of an integrated and automatically running optimization process of the at least one image and the modified data set of a geometric body of the object using a predetermined simulation procedure. The user obtains new and optimized assets including at least one of at least one image and the modified data set of a geometric body of the object that are acquired based on an optimized parametric representation. The user specifies the target of the optimization of the parametric representation by the selected performance metric. The target performance range determines the termination criterion.

A system for generating a generative model for supporting a user in generating or modifying a design of an object, the system comprising an input interface, a memory, and a processor. The processor is configured to acquire from a database, a plurality of data sets of geometric bodies of objects, for each data set at least one image associated with the data set, wherein each data set is associated with a class of the object. The processor is further configured to acquire, via the input interface textual parameters related to the objects, and to encode the acquired images by applying a vision-language model based on the textual parameters into vectors including numerical values for the acquired textual parameters. The processor is further configured to generate a parametric representation of each object, to generate training data based on the parametric representations and the associated data sets and/or the images, and to train a generative model using the generated training data, and to store the trained generative model in the memory.

A system for supporting a user in generating or modifying a design of an object, comprises an input interface configured to acquire at least one image and textual parameters associated with the image. The system further comprises a processor configured to encode the acquired at least one image by applying a vision-language model based on the textual parameters into vectors including numerical values for the acquired textual parameters, and to generate a parametric representation based on the vectors including the numerical values. The processor is further configured to compute, by applying a trained generative model, the corresponding 2D or 3D representation of an object based on the parametric representation, and to output the computed 2D or 3D representation of the object to the memory for storing the 2D or 3D representation of the object, or to an output interface for outputting the storing the 2D or 3D representation of the object to the user.

The systems achieve corresponding advantageous effects as discussed with reference to the embodiments of the computer-implemented methods.

A single embodiment of the system may implement both generating a generative model for supporting a user in generating or modifying a design of an object, and supporting a user in generating or modifying a design of an object.

The following description of embodiments refers to the figures, in which
Fig. 1 shows a simplified flowchart including steps in a training phase of the computer-implemented method;
Fig. 2 shows a simplified flowchart including steps in an application phase of the computer-implemented method;
Fig. 3 shows a block diagram providing an overview over the functional blocks and data structures of a system of an embodiment;
Fig. 4 shows an application scenario using the graphical user interface according to an embodiment;
Fig. 5 shows a block diagram providing an overview over the functional blocks and data structures of a system integrating an optimization process for object designs;
Fig. 6 shows a simplified hardware architecture for an implementation of the system.

In the figures, corresponding elements have the same reference signs. The discussion of the figures avoids discussion of same reference signs in different figures wherever considered possible without adversely affecting comprehensibility and avoiding unnecessary repetitions for sake of conciseness.

Before discussing the embodiments in detail, terms and nomenclature used in the discussion are clarified.

An object representation, e.g. a 3D object representation, is a numerical representation of an object, which generally may be used for purposes of visualization, computer simulation, and geometric modeling tasks. The object representation can be stored in different formats, such as meshes (.STL, .VTK, .OBJ), point clouds (.XYZ), or boundary representations (.IGES, .STP).

Numerical parameters are properties of objects that cannot be described as geometric data. For example, a vehicle design can be described by an STL mesh accompanied by the information about the weight, distance between axles, main dimensions, and weight distribution as metadata. The engineer uses the additional information included in the metadata to address design problems, such as a spatial arrangement of components, which is challenging to capture from the geometry by generative machine learning models.

A design of an object is a set of geometric features, represented by geometric data, of the object. The design of an object may also include information on material of the object included in metadata associated with the design of the object.

A vision-language model or VLM is a machine-learning model, which maps images and textual description provided as input into a single numerical embedding. In the present context, the VLM computes the probability of an image to match a textual description, given a set of possible textual descriptions.

A parametric description is a numerical vector representation obtained by concatenating the probabilities for the textual descriptors to the selected numerical parameters for at least one image or a set of images. In the present context, for an object stored in the database 10, the VLM outputs a vector <*v*₁, *v*₂, ... ,*vₜ*> and the object has additional parameters *<m*₁*, m*₂*,* ..., *mₚ>* in the corresponding metadata, a concatenation operation outputs a parametric representation *p* = < *v*₁, *v*₂, ..., *vₜ, m*₁*, m*₂*,* ..., *mₚ* > for the object.

A process of splitting data (data split) includes a division of an input data set, e.g., pairs of parametric representations on the one hand, and images or 3D representations on the other hand, into a training data set and a test data set. The training data set is used to optimize the parameters of the generative model, and the test data set is used to evaluate the performance of the generative model including the optimized parameters.

A generative model is a machine-learning model, which outputs a representation of an image or an object from an input set of values for the parametric representation. The generative model is defined by an architecture that corresponds to a graph of operations, and a corresponding set of parameters, which is optimized for generating the representations of images or objects included in the training data.

A graphical user interface (GUI) is a human-machine interface, which provides an interface between a human user and the system. The GUI enables the user to provide input information to the system, as well as to trigger the actions that the system is configured to execute, e.g., training the generative model. Using the GUI, the user may manipulate a representation of objects to generate new representations of objects or images, or start an optimization process to improve the performance of an object with respect to a specific objective, e.g. a specific value of a physical parameter or a range of values of a physical parameter.

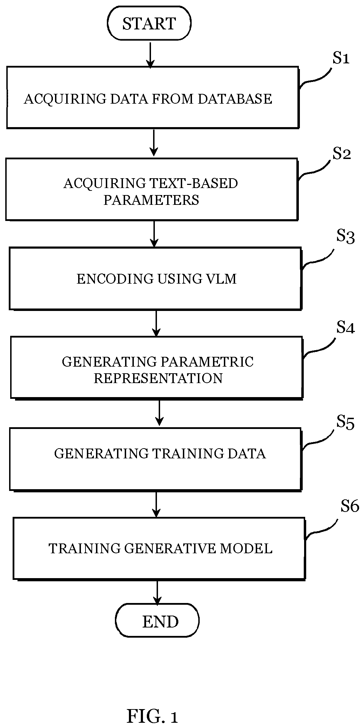

Fig. 1 shows a simplified flowchart including steps in a training phase of the computer-implemented method. The computer-implemented method generates a generative model for supporting a user in generating or modifying the design of an object.

In step S1, the method acquires, from a database 10, a plurality of data sets of geometric bodies of objects. The method acquires for each data set at least one image associated with the data set, wherein each data set is associated with a class of the object.

The class of the object is a relevant class, which the user indicates to the system 1. The database 10 includes 3D representations, images and numeric parameters of the samples from the database 10 that are associated with particular classes of objects. The user selects a particular class of objects from the classes of objects for which the database 10 stores data sets. General classes of objects include a classes "airplane", "motorcycle", or "car".

Optionally, the method also acquires, from the database 10, metadata including numerical parameters associated with the plurality of data sets of geometric bodies of objects and the at least one image associated with the data set in step S2.

In step S3, the method acquires textual parameters related to the objects.

In step S4, the method encodes the acquired images by applying a vision-language model (VLM) based on the textual parameters into vectors including numerical values for the acquired textual parameters.

The VLM is a machine-learning model that computes the probability of an input image *I* to fit each entry in a set of text prompts *T*. The input images *I* are selected from the samples stored in the database 10. The set of text prompts *T* correspond to the textual parameters provided by the user. The text prompts may include, *e.g*., characteristics such as "streamlined", "compact", "futuristic", or "classic", which are all suited to characterize designs of a car body. For each image, the VLM generates and outputs a vector, in which each entry of the generated vector is a numerical value for a textual parameter, using the same sequence as provided by the user.

Subsequently, the method generates in step S5 a parametric representation of each object; in particular, the method generates the parametric representation based on the vectors including numerical values for the acquired textual parameters.

Thus, steps S4 and S5, by applying the VLM, generates an output in the form of a matrix that includes vector representations for all sampled images.

Optionally in step S5, the method first generates the parametric representation of each object by first concatenating the vectors including numerical parameters with the numerical values of the corresponding metadata acquired from the database 10. Then, second, the method generates in step S5 the parametric representation of each object based on the concatenated vectors including the numerical parameters and the numerical values of the corresponding metadata acquired from the database 10.

In step S6, the method generates training data based on the parametric representations and the associated data sets and/or the images.

In step S7, the method then trains a generative model using the generated training data, and outputs the trained generative model.

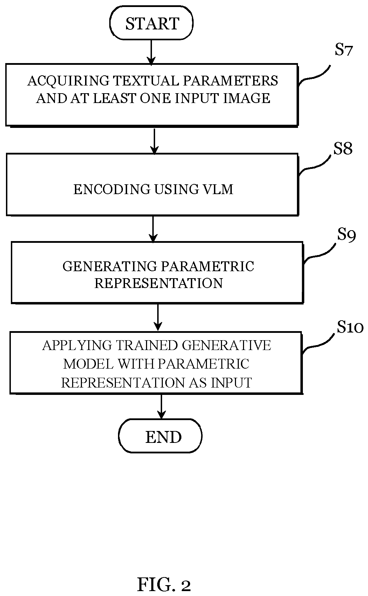

Fig. 2 shows a simplified flowchart including steps in an application phase of the computer-implemented method. The computer-implemented method supports the user in generating or modifying a design of an object.

A design of an object is a virtual design in the form of a 2D or 3D representation of a physical object. The design defines the aesthetic characteristics of the object, which include a boundary of the matter constituting the object with the environment. The design of the object is defined by geometric characteristics and the material of the object. The object may be, e.g., a mechanical system or a component of the mechanical system. The design of the object determines a performance of the manufactured object, and the requirements for manufacturing the object, and therefore influences the manufacturing cost, and further economic aspects.

The method includes a step S8, in which the method acquires, by an input interface, at least one image and textual parameters associated with the image. The textual parameters are design parameters in a textual format.

Optionally, the method further acquires in step S8 via the input interface, numerical parameters associated with the at least one image and the textual parameters.

In step S9, the method then encodes the acquired at least one image by applying a vision-language model based on the textual parameters into vectors including numerical values for the acquired textual parameters.

Then the method generates in step S10 a parametric representation based on the vectors including numerical values.

In case the method in step S8 acquired numerical parameters associated with the at least one image and textual parameters via the input interface, the step S10 includes in a first sub-step concatenating the vectors including numerical parameters with the numerical values of the corresponding numerical parameters, and then, in a second sub-step, the method in step S10 proceeds with generating the parametric representation based on the concatenated vectors including numerical values and the numerical values of the corresponding numerical parameters.

In step S11, following step S10, the method applies a trained generative model for computing at least one image or a data set of a geometric body of the object, or both, based on the generated parametric representation.

The generative model is a machine-learning model, e.g., an artificial deep neural network that has been trained using the steps as discussed with reference to fig. 1. The machine-learning model is defined by a model architecture including a graph of mathematical operations and a set of model parameters. The model parameters of the machine-learning model are optimized for minimizing a reconstruction error of 2D/3D representations based on the parametric representations using a training optimization algorithm as discussed with reference to fig. 1.

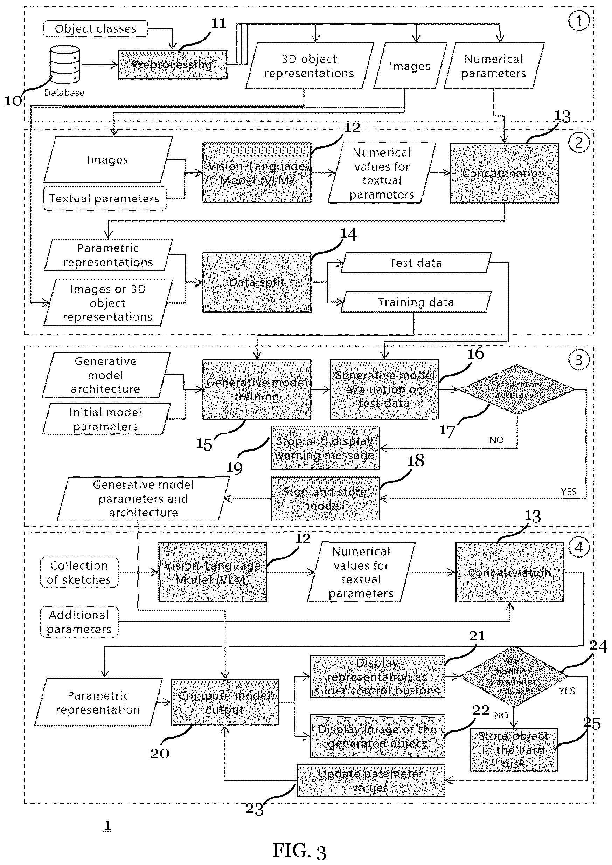

Fig. 3 shows a block diagram providing an overview over the functional blocks and data structures of a system in an embodiment.

The system 1 concerns a computer-implemented system for generating 2D or 3D representations of objects based on a collection of images of the target object, a set of design parameters defined using natural language as textual descriptors, and, in the embodiment illustrated by fig. 3, a set of numerical parameters that the user selects. The system 1 performs operations in a sequence of phases:
A first phase includes database preprocessing.

A second phase comprises generating the training data.

A third phase concerns training the generative model using the training data.

A fourth phase corresponds to an application phase of the system and includes generating objects using the trained generative model.

The system 1 comprises a database 10 of objects represented as 2D data or as 3D data, including, e.g., polygonal meshes, corresponding images of objects from multiple perspectives, and corresponding numerical parameters including, e.g., dimensions of the object, e.g. a length, a width, a height.

In particular, the database 10 comprises a plurality of objects represented in multiple image files, geometric data files, and additional text files with metadata.

The image files include views of the object from different perspectives.

The geometric data files include, e.g., polygonal meshes stored as VTK files. The visualization toolkit format (VTK format) is an open-source software system supports different dataset format used in 3D computer graphics, modeling, image processing, and visualization. The VTK is an example, respective other data formats may be used.

The additional text files include metadata, e.g., weight and volume of the objects, listed in the format of comma-separated numerical values.

The system uses the image data to both compute the values for the textual descriptors, as well as to generate new object representations or images of the object.

The system concatenates the metadata with the computed values for the textual descriptors for generating the parametric representation. In case the user wants to generate new object representations or images of a 3D object, the system 1 retrieves the geometric data from the database 10 and uses the retrieved geometric data to train the generative model.

For generating the database 10, the data can be mined from publicly available sources, e.g. using an approach such as ShapeNetCore. Alternatively or additionally, proprietary data may be used to generate the database 10.

The files stored in the database 10 are each associated with an identifier that is based on the class of object of the file. Examples for class identifiers include, e.g., the class "cars" or the class "airplane". The system leverages the class identifiers of objects to sample data from the database 10 for generating the training data for training the generative model.

The system 1 includes a preprocessing module 11. The preprocessing module 11 performs operations on data acquired by the preprocessing module 11 from the database 10.

The preprocessing module 11 samples images, geometric data and optionally from the database 10 to generate the parametric representations, to train and to evaluate the generative model.

The preprocessing module 11, based on the object class of objects acquired from the user, searches for the objects in the database 10 that fit the object class, and automatically retrieves the images, geometric representations and metadata of objects that fit the object class from the database 10.

The preprocessing module 11 may perform further preprocessing of the retrieved data in order to fit the machine learning (generative model).

Preprocessing in the preprocessing module 11 may include sampling of the 3D geometric data into 3D point clouds. Preprocessing may also include rescaling of the images retrieved from the database 10 or stored into the database 10.

In the first phase, based on the relevant object classe(s) of objects that the user indicates, the system 1 retrieves the object representations, images and numeric parameters of the samples from the database 10 that belong to the selected classes.

In the second phase, for each of the selected samples from the database 10, the system computes numerical values for the textual parameters using the images of each sample as an input to a pre-trained vision-language model 12 (VLM module 12).

The VLM module 12 is a machine-learning model that computes the probability of an input image *I* to fit each entry in a set of text prompts *T*. In the VLM module 12 of the second phase, the input images are drawn from the samples retrieved from the database 10 and provided by the preprocessing module 11. The set of text prompts input to the VLM module 12 corresponds to the textual descriptors (textual parameters) provided by the user. Textual descriptors may include text strings, e.g., [streamlined, compact, futuristic, classic]. The VLM module 12 outputs for each image a vector. Each entry of the vector is a numerical value for a textual parameter, in the same ordering as listed by the user in the textual descriptor. The VLM module 12 generates and outputs data in the format of a matrix including the vectors (parametric representations) for all image samples, and provides the output data to the concatenation module 13.

The concatenation module 12 obtains the parametric representations computed by the VLM module 12 and merged (concatenates) the obtained parametric representations with the metadata that includes numerical parameters of the objects. The concatenation module 12 obtains the numerical parameters from the preprocessing module 11, which samples the metadata associated with the objects from the database 10.

For an object of the database 10, the VLM module 12 outputs a vector *<v*₁*, v*₂, ..., *vₜ*>*.* The object is associated with additional numerical parameters <*m*₁, *m*₂*,* ..., *mₚ>* in the metadata provided by the preprocessing module 11, the concatenation module 13 performs a concatenation operation to generate a parametric representation *p* = < *v*₁*, v*₂, ..., *vₜ, m*₁*, m*₂*,* ..., *mₚ* > for the object.

The concatenation module 13 performs the concatenation operation for all sampled objects, if metadata stored in association with the object in the database 10 is available.

The system 1 concatenates the computed values output by the VLM module 12 and predetermined numerical parameters in order to generate a parametric representation for each sample. Before forwarding the generated data to the third phase, the system 1 splits the generated data including, e.g., pairs of images or object representations, and vector representations, into a training data set and a test data set.

The data-splitting module 14 of the system 1 performs the operation of dividing the set of parametric representations provided by the concatenation module 13 and the corresponding images or object representations from the database 10 into the training data set and the test data set.

The system then uses the training data set to train the generative model to reconstruct the images or object representations from the parametric representation.

The system 1 uses the test data set to verify the reconstruction performance of the generative model that has been trained on the training data set. The training data set and the test data set do not have any samples in common, i.e., the test data set is unseen by the generative model during the training process.

The system 1 then provides the training data set and the test data set to the third phase, in which the system uses both data sets to train (training data set) and evaluate (test data set) a generative model, respectively.

In the third phase, the system 1 initializes the generative model with an architecture, e.g., an artificial deep neural network, and a set of random parameters. The system 1 uses a training algorithm, e.g., the ADAM algorithm, to optimize the model parameters of the generative model for mapping the parametric representations of the training data set to the corresponding object representations. After the training of the generative model terminates the system 1 proceeds with evaluating the generative model by feeding representations of the test data set to the generative model and computing an error between the generated output of the generative model and the corresponding object representations in the test data set. If the computed error is within the limits targeted by the user, the system 1 determines the trained generative model to have a satisfactory accuracy and stores the model parameters of the trained generative model. If the computed error exceeds the limits targeted by the user, a warning may be generated and output to the user. The user then decides whether to store the model or to adjust the settings of the training phase.

In particular, a generative model-training module 15 of the system 1 trains a generative model that is a machine learning model, e.g., an artificial deep neural network. The generative model is defined by a model architecture, e.g. a graph of mathematical operations, and a set of model parameters. The generative model-training module 15 optimizes the model parameters for minimizing a reconstruction error of images or obj ect representations based on the parametric representations generated in the concatenation process by the concatenation module 13 by applying a training (optimization) algorithm. The training algorithm executed in the generative model-training module 15 uses a reconstruction error metric, e.g., Chamfer Distance. The generative model-training module 15 runs the training algorithm automatically until the reconstruction error metric is below a predetermined threshold, Alternatively, the generative model-training module 15 runs the training algorithm automatically until a predetermined maximum time has elapsed. Alternatively, the generative model-training module 15 runs the training algorithm automatically until a predetermined number of iterations is reached.

After terminating the training process in the generative model-training module 15, the generative model-evaluation module 16 evaluates the generative model including the model parameters when terminating the training process, by computing a mean reconstruction error using the data samples included in the test data set.

If the generative model-evaluation module 16 determines the computed mean reconstruction error being below a predetermined target threshold in a decision module 17, a generative model storage module 19 stores the model parameters and the architecture of the generative model in the database 10 for use in a subsequent application phase. If the generative model-evaluation module 16 determines the computed mean reconstruction error to exceed a predetermined target threshold in the decision module 17, the warning module 19 generates and outputs a warning message to the user. The warning message informs the user that the training of the generative model based on the provided training data has been unsuccessful, and terminates the training and evaluation in the third phase thereafter.

Once the generative model is trained and stored, in the fourth phase (application phase), the user applies the system 1 to compute new representations of objects and images using a parametric representation as input to the trained and stored generative model based on an input parametric representation.

The user starts the application phase by loading the trained generative model including the stored model architecture and the stored model parameters as generated in the training phase into the generative model-computation module 20.

The user provides an initial set of images of an object of interest. The initial set of images may be a set of sketches or a collection of first drawings of the object of interest. The initial set of images may include images of real world objects, e.g. a set of photographs of plural real world objects.

The user also provides additional textual parameters to the system 1.

The system 1 uses the VLM module 12, as discussed to compute numerical values for the textual parameters and the initial set of images and provides the computed numerical values for the textual parameters to the concatenation module 13. The concatenation module 13 performs a concatenation process on the numerical values for the textual parameters and additional numerical parameters, if applicable, and generates a parametric representation that bases on the initial set of images of an object of interest, the textual parameters, and optionally on further numerical parameters. The system 1 has now an automatically computed parametric representation available, and provides the parametric representation to the generative model-computation module 20.

The generative model-computation module 20 computes an object representation or an image of the target object based on the learned generative model and the parametric representation as input.

The generative model-computation module 20 provides the object representation to a representation display module 21.

The generative model-computation module 20 provides the image of the target object to a representation display module 22.

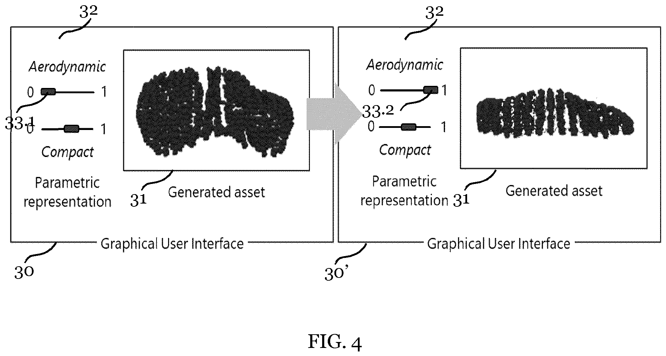

The system 1 displays the set of textual descriptors used in the third phase to train the generative model with the corresponding representation values as sliders, together with an image of the generated representation of the target object using a graphical user interface. An exemplary display of the graphical user interface is discussed with reference to fig. 4.

In a first approach, illustrated by the system 1 shown in fig. 3, the system 1 uses a graphical user interface (GUI). The GUI displays an image depicting the generated new object representation or the image of the object in a first display area driven by the representation display module 22.

Furthermore, the representation display module 21 uses the GUI to display the corresponding parametric representation as a set of slider bars in a second display area. The user can then manually change the values of the parameters as illustrated in fig. 4 using touch operations, for example. Alternatively or additionally, the system may offer alternative input means for operating the slider bars, including, e.g., mouse operations, keyboard operations, stylus or pointing device operations, trackball-based operations.

Optionally, the user may modify the position of the sliders using voice commands, a microphone of the system captures.

A modification detection module 24 determines whether the user changed the slider positions via a user operation. If the modification detection module 24 detects a user modification via the GUI, the system automatically forwards the amended values for the parameters to the generative model and computes the corresponding output image of the generated new object representations or the image of the object, which is then displayed as an image to the user.

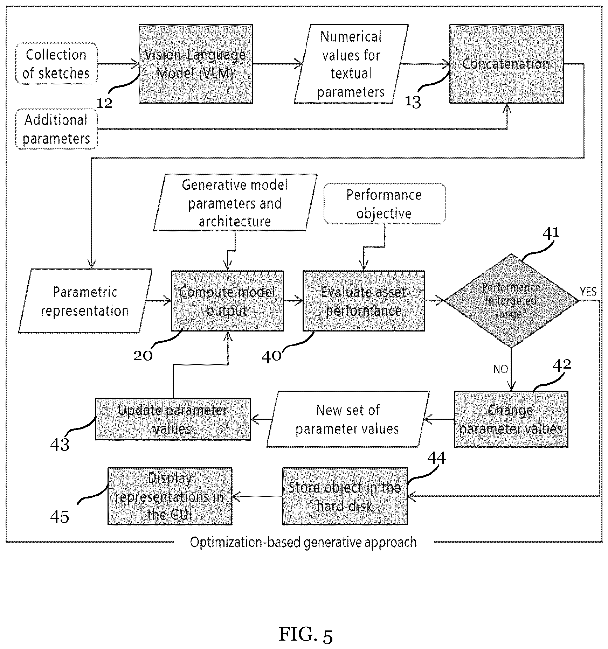

According to the second approach, the user utilizes an optimization algorithm to generate a new output image of the generated new object representations or the image of the object. Fig. 5 illustrates the second approach and the second approach is discussed with reference thereto.

In the second approach, in addition to the initial images, the user provides a target performance metric, in particular a physical parameter and a respective parameter range of values, e.g., aerodynamic drag. The system 1 then uses the physical parameter and a respective parameter range of values to evaluate the performance of the generated output image of the generated new object representations or the image of the object. By starting from the initial images, the system iteratively updates the values of the parametric representation using an optimization algorithm to generate output images of the generated new object representations or the image of the object that match the targeted performance, e.g. are within the parameter range of values for the physical parameter. Once the system determines that the new output image of the generated new object representations or the image of the object achieves the target performance, the system stores the generated new output image of the generated new object representations or the image of the object in the database 10. Additionally or alternatively, the system displays the resulting new output image of the generated new object representations or the image of the object to the user via the GUI.

Fig. 4 shows an application scenario using the graphical user interface 6 (GUI 6) according to an embodiment.

In particular, fig. 4 shows a first screen image 30 on a display of the GUI 6 in the left portion of fig. 4 and a second screen image 30' on a display of the GUI 6 in the right portion of fig. 4.

The first screen image 30 displays an image depicting the object representation or the image of the object in the first display area 31 driven by the representation display module 22. Furthermore, the representation display module 21 uses the GUI 6 to display the corresponding parametric representation by a set of slider bars in a second display area 32.

The user manually changes the values of the parameters as illustrated in fig. 4 using a touch operation shifting the slider for the textual parameter "aerodynamic" from the position 33.1 in the first screen 30 to the position 33.2 in the second screen 30'. The slider for the textual parameter "compact" is in the same position in the first screen 30 as well as in the second screen 30'. The change in the textual parameter "aerodynamic" results in a change in the parametric representation from the first screen 30 to the second screen 30'. This is reflected in the corresponding change of the computed object representation or image displayed in the first display area 31 when transiting from the first screen display 30 to the second screen display 30'. The object representation of the vehicle body displayed in the first display area 31 of the second screen display 30' shows an aerodynamically more advantageous shape than the object representation of the vehicle body displayed in the first display area 31 of the first screen display 30'.Fig. 5 shows a block diagram providing an overview over the functional blocks and data structures of a system 1 integrating an optimization process for object designs.

The system 1 comprises a performance evaluation module 40 that uses the target parameter range of values to evaluate a performance of the generated output image of the generated new object representation or the image of the object provided by the generative model-computation module 20.

In the performance evaluation module 40, the generated output image of the generated new object representation or the image of the object are evaluated using the target performance metric.

In particular, the performance evaluation module 40 computes the target performance metric based on the object representation or the image provided by the generative model-computation module 20.

In a performance determination module 41, the system 1 determines whether the computed performance metric is within the parameter range of values.

If the performance determination module 41 determines that the computed performance metric is within the parameter range of values (branch YES), the system 1 proceeds with a storage module 44 that stores the object representation or the image provided by the generative model-computation module 20, e.g., in a memory 3 of the system 1, or on a server 9.

The system 1 then provides the object representation or the image provided by the generative model-computation module 20 to a display module 45 for outputting the object representation or the image via an output device 8 to the user, e.g., by displaying the object representation or the image on the screen of a display.

If the performance determination module 41 determines that the computed performance metric is within the parameter range of values (branch NO), the system 1 proceeds with operations in a parameter change module 42, which changes the parameter values of the parametric representation to generate a new set of parameter values, which is provided to a parameter updating module 43.

The parameter-updating module 43 updates the values of the parametric representation and provides the updated generative model-computation module 20, for a next iteration of computing the object representation or the image in the generative model-computation module 20 using the trained generative model.

Hence, by starting from the initial images, the system 1 iteratively updates the values of the parametric representation using an optimization algorithm to generate output images of the generated new object representations or the image that match the target performance, e.g. are within the parameter range of values for the physical parameter.

Once the system 1 determines that the new output image of the generated new objet representations or the image of the object achieves the target performance, the system 1 stores the new object representations or the image of the object.

Additionally or alternatively, the system 1 displays the resulting new output image of the generated new object representations or the image of the object to the user via the GUI 6 and the output device 8.

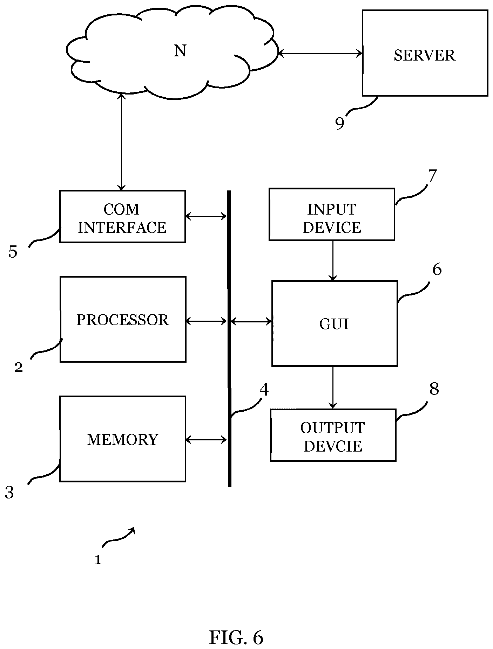

Fig. 6 shows a simplified hardware architecture for an implementation of the system 1 and the computer-implemented method.

The system 1 corresponds to a computing device, which comprises the components processor 2, memory 3, bus 4, communication interface 5, and a graphical user interface 6. The system 1 shown in fig. 6 further includes at least one input device 7 and at least one output device 8.

The processor 2 and the memory 3 provide a hardware base for running software implementing the modules of the system 1. The modules may correspond to the functional modules discussed with reference to figs. 3 and 5 in detail.

The communication interface 5 enables the system 1 to acquire data from remote sources via the network N, e.g. from a server 9. The communication interface 5 also enables to store data remote from the processor 2 and the memory 3. In particular, the communication interface 5 also enables to implement the system 1 in a distributed manner, e.g., by using processing and data storage resources via cloud computing.

The bus 4 connects the components processor 2, memory 3, communication interface 5, and graphical user interface 6 of the system 1.

The graphical user interface 6 includes an input interface for acquiring data from the user via input device 7, and an output interface for outputting data to the user via the output device 8.

The input interface may acquire input from the user via the input device 7 that includes, e. g., at least one of a slider bar as shown in fig. 4, a mouse, a stylus, a pointing device, a trackball, a microphone, and a touch-sensitive display.

The output device 6 may include at least one of at least one display for outputting information visually on a display screen, a beamer or projector for visually outputting the information, and at least one loudspeaker for outputting the information acoustically to the user or a group of users.

The embodiments of the computer-implemented method and the system 1 are useful tools in the development process of any mechanical system for assisting engineers to design components that comply with design, performance and manufacturing requirements. Appliers and application areas include, e.g., mobility companies, and manufacturing companies for power products.

Mobility companies, e.g., in the automotive or aerospace sector, may benefit from the invention for the development phase, in particular when designing components and new models of vehicles for mass production, in which both technical, aesthetic and cost aspects are relevant for the potential customers.

The system may support the user to design components that fit multiple products by suggesting similar geometric features to components that have a similar functionality.

Also in the growing fields of gaming and computer graphics, the development of characters based with facial features, clothing and posture that match their personality in the game or story may be significantly improved using embodiments of the method and system.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

The features described in the discussion of specific embodiments and depicted in the figures may be combined with each other for the invention defined in the attached claims.

## Claims

1. Computer-implemented method for generating a generative model for supporting a user in generating or modifying a design of an object, the method comprising
acquiring (S1), from a database (10), a plurality of data sets of geometric bodies of objects, for each data set at least one image associated with the data set, wherein each data set is associated with a class of the object;
acquiring (S2) textual parameters related to the objects;
encoding the acquired images by applying a vision-language model based on the textual parameters into vectors including numerical values for the acquired textual parameters;
generating (S4) a parametric representation of each object;
generating (S5) training data based on the parametric representations and the associated data sets and/or the images;
training (S6) a generative model using the generated training data, and outputting the trained generative model.

2. Computer-implemented method according to claim 1, wherein the method comprises
acquiring (S1), from the database (10), metadata including numerical parameters associated with the plurality of data sets of geometric bodies of objects and the at least one image associated with the data set, and
generating (S4) a parametric representation of each object comprises concatenating the vectors including numerical parameters with the numerical values of the corresponding metadata acquired from the database (10).

3. Computer-implemented method according to claim 1 or 2, wherein the method comprises
storing the parametric representation of each object in the database (10).

4. Computer-implemented method for supporting a user in generating or modifying a design of an object, the method comprising
acquiring (S7), by the input interface (6, 8), at least one image and textual parameters associated with the image;
encoding (S8) the acquired at least one image by applying a vision-language model based on the textual parameters into vectors including numerical values for the acquired textual parameters;
generating (S9) a parametric representation based on the vectors including numerical values;
computing (S10), by applying a trained generative model, at least one of at least one image and a data set of a geometric body of the object based on the generated parametric representation.

5. Computer-implemented method according to claim 4, wherein the method comprises
acquiring (S7), via the input interface (6, 7), numerical parameters associated with the at least one image and textual parameters, and
generating (S9) the parametric representation of each object comprises concatenating the vectors including numerical parameters with the numerical values of the corresponding numerical parameters.

6. Computer-implemented method according to claim 4 or 5, wherein the method comprises
outputting, via an output interface (6, 8), the numerical values for the acquired textual parameters converted into a text format;
outputting, via the output interface (6, 8), the at least one of the at least one image and the data set of a geometric body of the object;
acquiring, via the input interface (6, 7), a user input that modifies the output numerical values for the acquired textual parameters converted into a text format, and generating a modified geometric representation based on the modified numerical values;
computing (S10), by applying the trained generative model, at least one of at least one modified image and a modified data set of a geometric body of the object based on the modified generated parametric representation.

7. Computer-implemented method according to one of claims 4 to 6, wherein the method comprises
acquiring, via the input interface (6, 7), a target performance metric for the object and a target performance range for the target performance metric; and
the method iteratively performing
simulating a performance of the at least one of at least one image and a data set of a geometric body of the object and computing the target performance metric; and
in case the computed target performance metric does not meet the target performance range,
updating the parametric representation;
computing, by applying the trained generative model, the at least one of at least one image and the modified data set of a geometric body of the object based on the updated generated parametric representation;
until the computed target performance metric does meet the target performance range, and
outputting the at least one of at least one image and the modified data set of a geometric body of the object the computed target performance metric does meet the target performance range.

8. Computer-implemented method according to one of the preceding claims, wherein
the generative model is a machine learning model, in particular an artificial neural network.

9. System for generating a generative model for supporting a user in generating or modifying a design of an object, the system comprising an input interface (3), a memory (3), and
a processor (2) configured to
acquire from a database (10), a plurality of data sets of geometric bodies of objects, for each data set at least one image associated with the data set, wherein each data set is associated with a class of the object,
acquire, via the input interface (6, 7) textual parameters related to the objects,
encode the acquired images by applying a vision-language model based on the textual parameters into vectors including numerical values for the acquired textual parameters,
generate a parametric representation of each object;
generate training data based on the parametric representations and the associated data sets and/or the images,
train a generative model using the generated training data, and to store the trained generative model in the memory (3).

10. System for supporting a user in generating or modifying a design of an object, wherein the system comprises
an input interface (6, 7) configured to acquire at least one image and textual parameters associated with the image;
a processor (2) configured to encode the acquired at least one image by applying a vision-language model based on the textual parameters into vectors including numerical values for the acquired textual parameters, and
to generate a parametric representation based on the vectors including the numerical values,
to compute, by applying a trained generative model, the corresponding 2D or 3D representation of an object based on the parametric representation, and
to output the 2D or 3D representation of the object to the memory (3) for storing the 2D or 3D representation of the object, or to an output interface (6,8) for outputting the storing the 2D or 3D representation of the object to the user.
